# EUROPEAN PATENT APPLICATION

(11) **EP 2 899 601 A2**
(43) Date of publication of application: **29.07.2015**
(21) Application number: 15151613.5
(22) Date of filing: 19.01.2015
(51) Int. Cl.: G04G 9/00, G04G 9/08

(54) **Electronic watch**

(30) Priority: 22.01.2014 JP 2014009755
(71) Applicant: Seiko Epson Corporation, Tokyo 163 (JP)
(72) Inventor: Kogoshi, Tsuyoshi, Nagano, 392-8502 (JP); Murayama, Tetsuro, Nagano, 392-8502 (JP); Miyake, Tetsuya, Nagano, 392-8502 (JP)
(74) Representative: Hoffmann Eitle

(57) **Abstract**

An electronic watch includes a display section and has a first mode in which a first image that expresses passage of time is displayed on the display section and a second mode in which a second image that includes time information is displayed on the display section.

## Description

### CROSS-REFERENCE TO RELATED APPLICATIONS

This application claims priority to Japanese Patent Application No. 2014-009755 filed on January 22, 2014. The entire disclosure of Japanese Patent Application No. 2014-099755 is hereby incorporated herein by reference.

### BACKGROUND

### Technical Field

The present invention relates to an electronic watch.

### Related Art

Recently, since time measuring precision of watches has dramatically improved, the attractiveness of watches which only display accurate time is diminished and there is a strengthening tendency toward there being a demand for watches which are fashionable and a joy to use. As one solution for realizing such a watch, it is thought that it is possible for a watch to not only display accurate time but to also display content that is fashionable and a joy to use. For example, an electronic watch is proposed in Japanese Unexamined patent Application Publication (Translation of PCT Application) No. H10-504400 (PTL 1) with a built-in liquid crystal display apparatus which displays geometric images, animation images, and the like or which is provided with an aesthetically pleasing fashionable color change function.

### SUMMARY

However, although fashionability and joy of use are improved in the electronic watch described in PTL 1, a user is not able to sense the flow of time by viewing the display of the liquid crystal display apparatus and is only able to view time through an accurate time display using analog clock hands since display content on the liquid crystal display apparatus bears no relationship to time. In this manner, a watch where it is possible for a user to accurately ascertain the time and enjoy the flow of time in a pleasant manner has not been proposed up until now.

The present invention is carried out in consideration of the problems described above and it is possible to provide an electronic watch where it is possible to not only ascertain the time but enjoy the flow of time according to several aspects of the present invention.

The present invention is carried out in order to solve at least a portion of the problems described above and is able to be realized as the following embodiments and applied examples.

### [Applied Example 1]

An electronic watch according to the present applied example includes a display section and has a first mode in which a first image that expresses passage of time is displayed on the display section and a second mode in which a second image that includes time information is displayed on the display section.

According to the electronic watch as in the present applied example, it is possible for a user to ascertain the time using the second mode and enjoy the flow of time using the first mode.

### [Applied Example 2]

In the electronic watch according to the applied example described above, the display section may include two substrates and an electrophoretic element that is arranged between the two substrates and has electrophoretic particles, and the display section is configured to display at least a first color and a second color.

According to the electronic watch as in the present applied example, since the display section which uses the electrophoretic element is included, operating with low power consumption is possible since it is possible to hold an image without power being supplied for a certain period of time.

### [Applied Example 3]

In the electronic watch according to the applied example described above, an interval for updating the first image may be longer than an interval for updating the second image.

According to the electronic watch as in the present applied example, it is possible for a user to more roughly sense the flow of time in the first mode than in the second mode since images change in the first mode with intervals which are longer than the interval for updating in the second mode.

### [Applied Example 4]

In the electronic watch according to the applied example described above, the interval for updating the first image may be longer than one minute.

According to the electronic watch as in the present applied example, it is possible for a user to roughly sense the flow of time in the first mode since images change in the first mode with intervals which are longer than 1 minute.

### [Applied Example 5]

In the electronic watch according to the applied example described above, an image in which a layer with the first image and a layer with a third image that is indicative of a watch overlap with each other may be displayed in the first mode.

The interval for updating the first image and the interval for updating the third image may be different.

According to the electronic watch as in the present applied example, it is possible for a user to generally ascertain the time using the time display in the third image in the first mode while roughly sensing the flow of time due to changes in the first image.

### [Applied Example 6]

In the electronic watch according to the applied example described above, the interval for updating the first image may be longer than the interval for updating the third image.

According to the electronic watch as in the present applied example, it is possible for a user to sense the flow of time without changing the first image since images where the time display of the third image changes are displayed in the first mode while the first image does not change.

### [Applied Example 7]

In the electronic watch according to the applied example described above, the first image that includes a time scale, or an image in which a layer with the first image and a layer with an image that includes the time scale overlap with each other may be displayed on the display section in the first mode.

According to the electronic watch as in the present applied example, it is possible for a user to generally ascertain the time using the image of the time scale in the first mode while roughly sensing the flow of time due to changes in the first image.

### [Applied Example 8]

In the electronic watch according to the applied example described above, the first image may be updated in the first mode by an image that is larger than the first image being scrolled.

According to the electronic watch as in the present applied example, it is possible for a user to roughly sense the flow of time in the first mode since an image where a display object is gradually moved is displayed.

### [Applied Example 9]

In the electronic watch according to the applied example described above, an image in which a layer with a fourth image that relates to a specific time and date is overlapped with a layer with the first image may be displayed at the specific time and date in the first mode.

According to the electronic watch as in the present applied example, it is possible for a user to be entertained in the first mode since it is possible to display an image which relates to a specific time and date.

### [Applied Example 10]

In the electronic watch according to the applied example described above, the first image that is different according to specific periods, or an image according to a season that overlaps with at least a portion of the first image may be displayed on the display section in the first mode.

According to the electronic watch as in the present applied example, it is possible for a user to enjoy the rough flow of time in the first mode due to images which are different according to specific periods.

### BRIEF DESCRIPTION OF THE DRAWINGS

Referring now to the attached drawings which form a part of this original disclosure:
Fig. 1 is a diagram of the outer appearance of an electronic watch of an embodiment;
Fig. 2 is a functional block diagram of an electrophoretic display apparatus of an embodiment;
Fig. 3 is a diagram illustrating a configuration of a display section and a drawing IC of an embodiment;
Fig. 4 is a circuit configuration diagram of a pixel of an embodiment;
Fig. 5A is a diagram illustrating a configuration example of an electrophoretic element, and Fig. 5B and Fig. 5C are explanatory diagrams of an operation of an electrophoretic element;
Fig. 6 is an explanatory diagram of a method for updating images on a display section in an embodiment;
Fig. 7 is a diagram illustrating transitioning between display modes in an embodiment;
Fig. 8 is a diagram illustrating an example of a picture scroll image in a first embodiment;
Fig. 9 is a diagram illustrating a portion of the picture scroll image in Fig. 8;
Figs. 10A and 10B are diagrams illustrating an example of an image which is displayed in a picture scroll mode in the first embodiment;
Fig. 11 is an explanatory diagram of a layer structure of images in the first embodiment;
Fig. 12 is a flow chart diagram illustrating an outline of a processing procedure for a picture scroll mode using a computation IC in the first embodiment;
Fig. 13 is a diagram illustrating an example of a picture scroll image in a second embodiment;
Figs. 14A and 14B are diagrams illustrating examples of images which are displayed in a picture scroll mode in the second embodiment;
Fig. 15 is an explanatory diagram of a layer structure of images in the second embodiment;
Fig. 16 is a flow chart diagram illustrating an outline of a processing procedure for a picture scroll mode using a computation IC in the second embodiment;
Figs. 17A and 17B are explanatory diagrams of a layer structure of images in a third embodiment; and
Figs. 18A and 18B are explanatory diagrams of a layer structure of images in a fourth embodiment.

### DETAILED DESCRIPTION OF EMBODIMENTS

Preferred embodiments of the present invention will be described in detail below using the drawings. Here, the embodiments which will be described below do not necessarily limit the contents of the present invention which is described in the claims. In addition, not all of the configurations which are described below are necessarily essential configuration elements of the present invention.

### 1. First Embodiment

### [Outline of Electronic Watch]

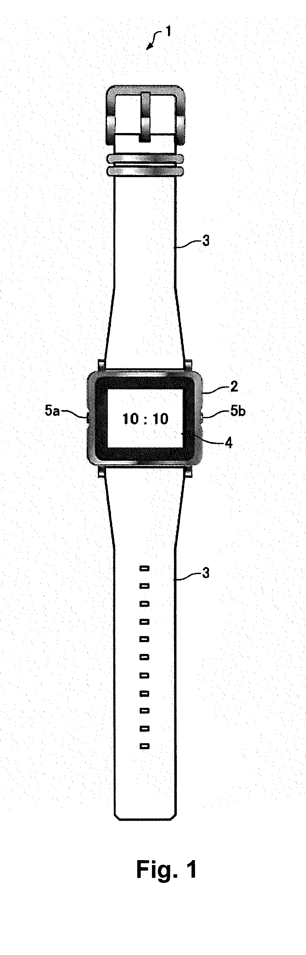

Fig. 1 is a diagram of the outer appearance of an electronic watch 1 of the present embodiment and is a planar diagram where the electronic watch 1 is viewed from a direction (a front surface) which is perpendicular to a display section and where it is possible to recognize the display section. As shown in Fig. 1, the electronic watch 1 of the present embodiment is a wrist watch and is provided with a watch casing 2, a pair of bands 3 which are linked with the watch casing 2, and the like.

The front surface of the watch casing 2 is provided with a display section 4 which is configured by an electrophoretic display (EPD) panel, and an operation button A (5a) and an operation button B (5b) are provided on a side surface of the watch casing 2 (a direction which is perpendicular with regard to the direction of the front surface).

Various types of images, for example, various types of images which includes time information which is updated every second or every minute, images which express the passage of time, images for correcting time, and the like, are displayed on the display section 4 according to an operation (an input operation) of pressing the operation button A (5a) or the operation button B (5b).

An electrophoretic display apparatus (which, except for the display section, is not shown in the diagrams), which is provided with the display section 4 and a driving apparatus (which is not shown in the diagrams) which drives the display section 4, is provided in an inner section of the watch casing 2.

### [Configuration of Electrophoretic Display Apparatus]

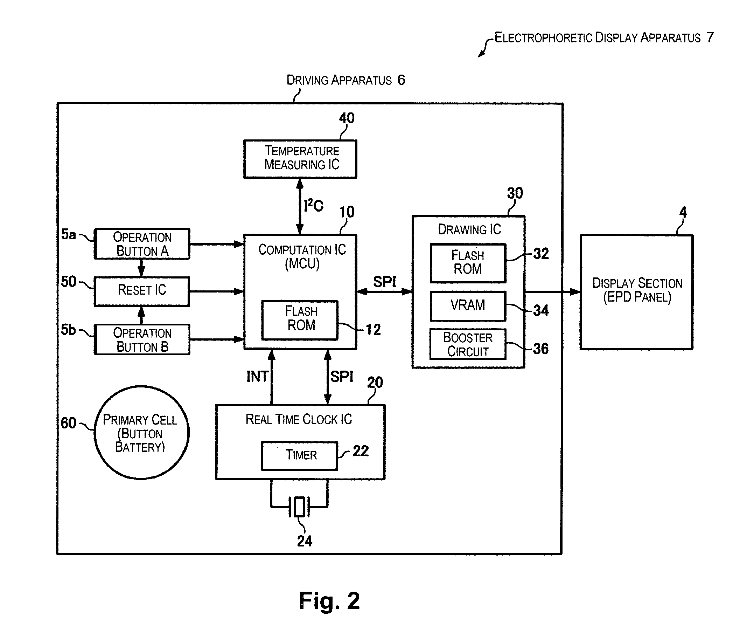

Fig. 2 is a functional block diagram of the electrophoretic display apparatus which is provided in the electronic watch 1 of the present embodiment. As shown in Fig. 2, an electrophoretic display apparatus 7 which provided in the electronic watch 1 of the present embodiment has the display section 4 (refer to Fig. 1) and a driving apparatus 6, and the driving apparatus 6 is provided with a computation integrated circuit (IC) 10, a real time clock (RTC) IC 20, a drawing IC 30, a temperature measuring IC 40 and a reset IC 50. As will be described later, the electrophoretic display apparatus 7 is configured in the present embodiment so as to continuously operate for a number of years even using a primary cell 60 with a small capacity such as a button battery due to lower power consumption being realized by the ICs and the display section 4 in the present embodiment. However, the electrophoretic display apparatus 7 may be configured so as to operate with a rechargeable battery (a secondary battery).

In the present embodiment, the computation IC 10 is realized using a highly versatile micro computer unit (MCU) which has a built-in rewritable flash ROM 12 and is operated according to programs and data which are stored in the flash ROM 12. Accordingly, it is possible to easily modify the functions of the computation IC by rewriting the programs and data which are stored on the flash ROM 12. In addition, it is possible to easily cope with modifying the programs since it is possible to rewrite programs and data in a state of movement (a watch driving apparatus) where the computation IC 10 is built-in.

The computation IC 10 performs processing for determining the type or mode of an image which is displayed on the display section 4 according to an operation (an input operation) of pressing the operation button A (5a) and the operation button B (5b). The modes which are determined by the computation IC 10 are, for example, a minute updating mode (which is an example of a second mode) where an image (which is an example of a second image), which includes a time display which is updated every minute, is displayed on the display section 4, a second updating mode (which is another example of the second mode) where an image, which includes time display which is updated every second, is displayed on the display section 4, a picture scroll mode (which is an example of a first mode) where images, which are a portion of a picture scroll image (which is an example of first images), are sequentially displayed on the display section 4 while the picture scroll image is being scrolled, a time correction mode where time, which is displayed on the display section 4, is advanced or wound back according to an operation (an input operation) of pressing the operation button A (5a) and the operation button B (5b) or the like. The picture scroll image will be described later in detail.

For example, the computation IC 10 performs processing in the minute updating mode, the second updating mode, and the picture scroll mode for acquiring time information such as the date and the time from the real time clock IC 20 and determining content which is displayed on the display section 4, and the computation IC 10 performs processing in the time correction mode for transmitting time correction values to the real time clock IC 20 according to an operation (an input operation) of pressing the operation button A (5a) and the operation button B (5b).

The flash ROM 12 stores a macro instruction for deleting an image (an image deleting macro instruction) which is displayed on the display section 4 and a macro instruction (a new image drawing macro instruction) for drawing a new image on the display section 4. The computation IC 10 performs processing for reading out a desired macro instruction from the flash ROM 12 at a predetermined timing and transmitting the macro instruction to the drawing IC 30.

In addition, the computation IC 10 performs processing for transferring image data from the drawing IC 30 to the display section 4 and processing for the drawing IC 30 to drive the display section 4. In addition, the computation IC 10 supplies a reference signal (for example, 4 kHz) for driving the display section 4 to the drawing IC 30.

In addition, for example, the computation IC 10 performs initialization processing such as compulsory setting of the time correction mode when a reset signal is supplied from the reset IC 50.

In addition, the computation IC 10 performs processing for supplying power to the temperature measuring IC 40 and the drawing IC 30, processing for reading out a temperature measurement value from the temperature measuring IC 40, and processing for determining the period of time and the timing for applying a driving pulse to the display section 4 based on the temperature measurement value which is read out.

In addition, the computation IC 10 has a normal operation mode and a sleep mode, and the computation IC 10 operates in synchronization with a clock signal which is output by an oscillation circuit (for example, a CR oscillation circuit which is configured by a capacitor C and a resistor R) which is built into the computation IC 10 in the normal operation mode and the oscillation circuit is stopped in the sleep mode so that power consumption is lower than in the normal operation mode. In order to realize low power consumption, the computation IC 10 operates in the normal operation mode when performing processing (each processing which is described above) for updating the display of the display section 4, saves the current mode information and the data which is being used in a random access memory (RAM) (which is not shown in the diagrams) which is built into the computation IC 10 when not performing any processing, and stands by in the sleep mode. For example, in a case where the minute updating mode and the picture scroll mode are selected, the computation IC 10 transmits drawing information (a macro instruction) for an image which is displayed on the display section 4 to the drawing IC 30 when in the normal operation mode and transitions to the sleep mode after measuring time is started using a timer 22 of the real time clock IC 20. In addition, when in the sleep mode, the computation IC 10 transitions to the normal operation mode by receiving an interruption signal INT (a time measuring completion signal), which indicates that time is measured for a predetermined period of time by the timer 22 (time measuring completion), from the real time clock IC 20.

Other than this, the computation IC 10 may perform processing for determining whether or not a high-temperature limit or a low-temperature limit where normal operation is possible is reached by reading out a temperature measurement value from the temperature measuring IC 40, processing for determining whether or not the low-temperature limit is reached by monitoring a voltage value from the primary cell 60, and the like.

In the present embodiment, the computation IC 10 performs each processing by executing a program which is stored in advance in the flash ROM 12, but may execute each processing by receiving a program via a network from a server which is connected to the network and storing the program in an internal memory. In addition, the electronic watch 1 may be configured so as to be able to connect with an information storage medium such as a memory card and the computation IC 10 may perform each processing by executing a program which is stored on the information storage medium.

The real time clock IC 20 generates an oscillation signal at, for example, 32,768 kHz by a quartz oscillator 24 being oscillated, measures the time in seconds, minutes, hours, and the like and the date in days, months, years, and the like using a clock signal where the oscillation signal is segmented, and generates time information which includes seconds, minutes, hours, days, months, years, and the like. The time information is stored in a register (which is not shown in the diagrams) which is built into the real time clock IC 20, and the real time clock IC 20 transmits a portion or all of the time information which is stored in the register to the computation IC 10 according to a request from the computation IC 10.

In addition, according to a request from the computation IC 10, the real time clock IC 20 starts measuring time using the timer 22 and transmits the interruption signal INT (the time measuring completion signal) to the computation IC 10 when measuring time by the timer 22 is complete. The period of time which is measured by the timer 22 may be a certain period of time or may be a time which is designated by the computation IC 10.

The drawing IC 30 performs processing for developing image data in order to delete the current image in a video RAM (VRAM) 34 which is built into the drawing IC 30 according to an image deleting macro instruction from the computation IC 10 and processing for developing image data in order to display a new image on the VRAM according to a new image drawing macro instruction from the computation IC 10. In addition, the drawing IC 30 performs processing for supplying power to the display section 4 and transferring image data which is developed on the VRAM 34 to the display section 4 and performs progressing for generating a driving pulse with a high voltage, (for example, 15 V) where an external power source voltage (for example, 5 V) is boosted using a booster circuit 36 which is built into the drawing IC 30, and driving the display section 4.

Image parts data (for example, parts data such as "1", "0" and ":" for performing display in Fig. 1), background data, picture scroll image data (data of the entire picture scroll image which is displayed in the picture scroll mode), and the like which are displayed on the display section 4 are stored in a flash ROM 32 which is built into the drawing IC 30. Parts data which are to be drawn and coordinate information of the parts data (coordinates where the origin for each of the parts data are to be arranged) or information on background data which is to be drawn, and the like are included in the image deleting macro instruction or the new image drawing macro instruction which is transmitted from the computation IC 10. The drawing IC 30 reads out the parts data which is stored on the flash ROM 32 in accordance with the image deleting macro instruction or the new image drawing macro instruction and writes in the respective parts which are selected to an address in the VRAM 34 which corresponds to coordinates where the parts data are to be displayed in a display region on the display section 4 or reads out background data which is stored in the flash ROM 32 and writes in the background data to a predetermined address in the VRAM 34.

In addition, the drawing IC 30 adjusts an application (transmission) timing and pulse width of the driving pulse using a reference signal (for example, 4 kHz) which is supplied from the computation IC 10. In addition, the drawing IC 30 has an oscillation circuit (which is not shown is the diagrams) such as a CR oscillation circuit built in, generates a clock signal with a relatively high frequency (for example, 400 kHz) using the oscillation circuit, and performs each processing described above without processing for generating a driving pulse. In this manner, it is possible to achieve lower power consumption by the drawing IC 30 adjusting the application (transmission) timing and pulse width of the driving pulse using the reference signal (for example, 4 kHz) where the frequency is sufficiently lower than the clock signal which is generated by the built-in oscillation circuit.

Here, in a case where the minute updating mode is selected, the real time clock IC 20 transmits a 00 second timing signal to the computation IC 10 when each minute reaches exactly 00 seconds, and the computation IC 10 receives the timing signal and instructs application (transmission) of the driving pulse to the display section 4 with regard to the drawing IC 30. The drawing IC 30 receives the instruction and applies (transmits) the driving pulse to the display section 4, and the display section 4 receives the driving pulse and displays a new image (an image which includes time where one minute has elapsed). In this manner, in the minute updating mode, it is possible for the time display to start changing at a more precise timing as compared to a case of synchronizing with the non-synchronized clock signal which is generated by the drawing IC 30 by synchronizing updating of images on the display section 4 with the precise timing signal which is transmitted by the real time clock IC 20.

The temperature measuring IC 40 is operated by power being supplied from the computation IC 10 and performs processing where the temperature is measured according to a request from the computation IC 10 and a temperature measurement value is converted to a digital value by an A/D converter (which is not shown in the diagrams) which is built into the temperature measuring IC 40 and is transmitted to the computation IC 10.

The reset IC 50 generates a reset signal only for a predetermined period of time using a CR circuit (which is not shown in the diagrams) which is built into the reset IC 50 and the reset signal is supplied to the computation IC 10 in a case where a predetermined pressing operation is performed with regard to the operation button A (5a) and the operation button B (5b) (for example, simultaneously pressing and holding down the buttons for a predetermined period of time or more).

### [Configuration of Display Section and Drawing IC]

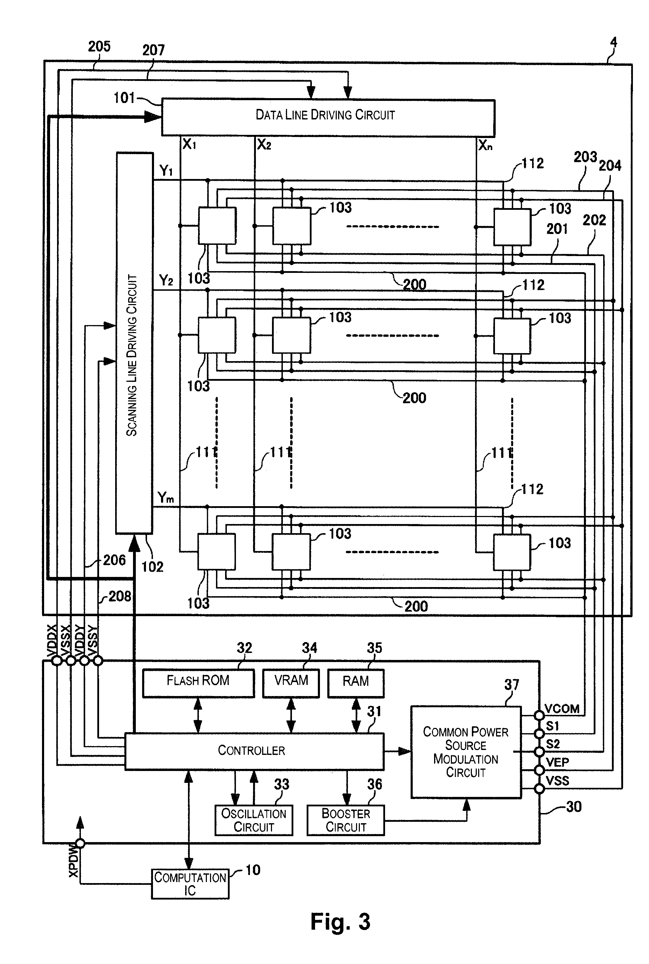

Fig. 3 is a diagram illustrating a configuration of the display section 4 and the drawing IC 30 of the present embodiment. As shown in Fig. 3, the display section 4 of the present embodiment is an active matrix type electrophoretic display panel (EPD panel), and it is possible for various images such as characters, numbers, photos, patterns and illustrations to be displayed.

A data line driving circuit 101 and a scanning line driving circuit 102 are provided on the display section 4. In addition, a plurality of data lines 111 which extend from the data line driving circuit 101 and a plurality of scanning lines 112 which extend from the scanning line driving circuit 102 are formed in the display section 4, and a plurality of pixels 103 are provided to correspond to positions where the data lines 111 and the scanning lines 112 intersect.

The data line driving circuit 101 is connected to each of the pixels 103 using n of the data lines 111 (X1, X2, ..., Xn). The data line driving circuit 101 supplies an image signal, which is stipulated by one bit of image data which corresponds to each of the pixels 103, to the pixels 103 in accordance with control by the controller 31 which is built into the drawing IC 30. Here, in the present embodiment, the data line driving circuit 101 supplies a low level image signal to the pixels 103 in a case of stipulating pixel data of "0" and supplies a high level image signal to the pixels 103 in a case of stipulating pixel data of "1".

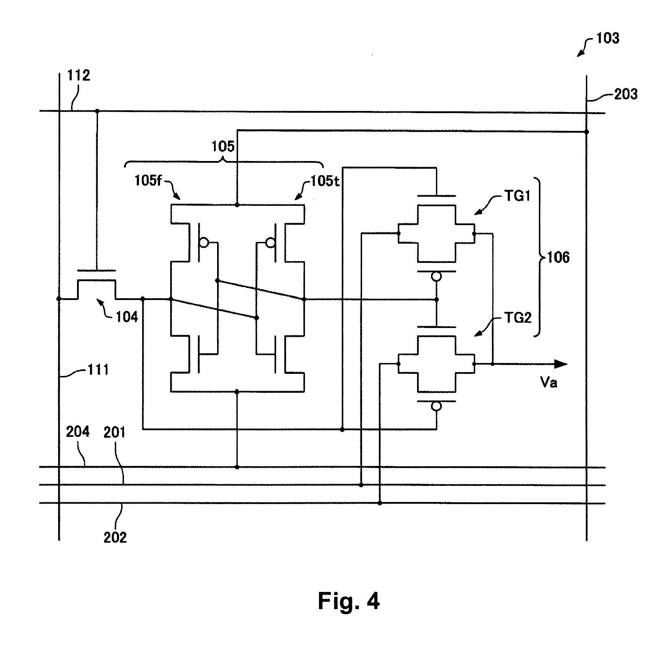

The scanning line driving circuit 102 is connected to each of the pixels 103 using m of the scanning lines 112 (Y1, Y2, ..., Ym). The scanning line driving circuit 102 supplies a selection signal which stipulates an on timing for a driving TFT 104 (refer to Fig. 4) which is provided in the pixel 103 by sequentially selecting the scanning lines 112 from a first row to an m^{th} row in accordance with control by the controller 31.

The display section 4 is provided with a high-potential power source line 205 which extends from the controller 31 via a VDDX terminal in the drawing IC 30, and the high-potential power source line 205 is connected to the data line driving circuit 101. In addition, the display section 4 is provided with a high-potential power source line 206 which extends from the controller 31 via a VDDY terminal in the drawing IC 30, and the high-potential power source line 206 is connected to the scanning line driving circuit 102. The controller 31 performs control of whether or not a high potential (5 V) is supplied to the high-potential power source lines 205 and 206.

In addition, the display section 4 is provided with a low-potential power source line 207 which extends from the controller 31 via a VSSX terminal in the drawing IC 30, and the low-potential power source line 207 is connected to the data line driving circuit 101. In addition, the display section 4 is provided with a low-potential power source line 208 which extends from the controller 31 via a VSSY terminal in the drawing IC 30, and the low-potential power source line 208 is connected to the scanning line driving circuit 102. The controller 31 supplies a low potential (0 V) to the low-potential power source lines 207 and 208.

In addition, the display section 4 is provided with common electrode wiring 200, a first pulse signal line 201, a second pulse signal line 202, a high-potential power source line 203, and a low-potential power source line 204 which extend from a common power source modulation circuit 37 and each of the wirings are connected to the pixels 103 respectively via a VCOM terminal, an S1 terminal, an S2 terminal, a VEP terminal and a VSS terminal in the drawing IC 30. The common power source modulation circuit 37 generates various types of signals which are respectively supplied to the wirings described above and performs electrical connection and disconnection (high impedance, Hi-Z) for the wirings described above in accordance with control by the controller 31.

The drawing IC 30 is configured to include the controller 31, the flash ROM 32, the oscillation circuit 33, the VRAM 34, a RAM 35, the booster circuit 36 and the common power source modulation circuit 37. The controller 31 is in a power off state until an enabling signal (a high level signal) is input from the computation IC 10 to an enabling terminal XPDW and is powered on when the enabling signal is input. When in a power on state, the controller 31 controls the flash ROM 32, the oscillation circuit 33, the VRAM 34, the booster circuit 36, and the common power source modulation circuit 37 with the RAM 35 as a work region and performs each processing in order to display an image on the display section 4.

Fig. 4 is a circuit configuration diagram of the pixel 103 which is illustrated in Fig. 3. Here, the wirings which are the same as in Fig. 3 are given the same numbering and the description thereof is omitted. In addition, description of all the pixels which share the common electrode wiring 200 is omitted.

As shown in Fig. 4, the driving thin film transistor (TFT) 104, a latch circuit 105, and a switch circuit 106 are provided in the pixel 103. The pixel 103 is configured with a static random access memory (SRAM) system where the image signal is held as a potential using the latch circuit 105.

The driving TFT 104 is a pixel switching element which is formed from an N channel type metal oxide semiconductor (MOS) transistor. A gate terminal of the driving TFT 104 is connected to the scanning line 112, a source terminal of the driving TFT 104 is connected to the scanning line 111, and a drain terminal of the driving TFT 104 is connected to a data input terminal of the latch circuit 105. The latch circuit 105 is provided with a transfer inverter 105t and a feedback inverter 105f. A power source voltage, which corresponds to a potential difference between the high-potential power source line 203 and the low-potential power source line 204, is supplied to the transfer inverter 105t and the feedback inverter 105f.

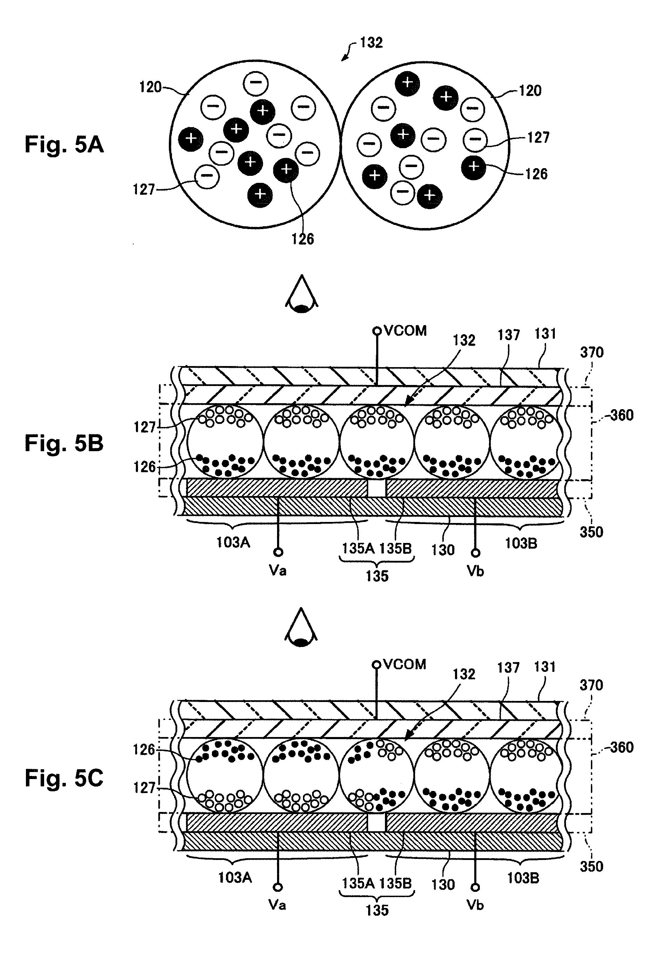

The switch circuit 106 is formed from transmission gates TG1 and TG2 and outputs a signal to a pixel electrode 135 (refer to Fig. 5B and Fig. 5C) according to the level of pixel data which is stored in the latch circuit 105.

Pixel data of "1" (a high level image signal) is stored in the latch circuit 105 and the switch circuit 106 outputs a signal which is propagated over the first pulse signal line 201 when the transmission gate TG1 is in an on state. On the other hand, pixel data of "0" (a low level image signal) is stored in the latch circuit 105 and the switch circuit 106 outputs a signal which is propagated over the second pulse signal line 202 when the transmission gate TG2 is in an on state. Using a circuit configured in this manner, it is possible to control the potential, which is supplied with regard to the pixel electrode 135, from each of the pixels 103.

In the present embodiment, the display section 4 has a plurality of electrophoretic elements with a two particle system of microcapsules and controls the color of each of the pixels 103 by applying an electric field to each of the electrophoretic elements. Fig. 5A is a diagram illustrating a configuration of an electrophoretic element 132 of the present embodiment. The electrophoretic element 132 is arranged between an element substrate 130 and an opposing substrate 131 (refer to Fig. 5B and Fig. 5C). The electrophoretic element 132 is configured so that a plurality of microcapsules 120 are aligned. For example, the microcapsules 120 enclose, for example, a colorless transparent dispersion liquid, a plurality of white electrophoretic particles (white particles 127) and a plurality of black electrophoretic particles (black particles 126). In the present embodiment, the white particles 127 are negatively charged and the black particles 126 are positively charged. Here, there may be other combinations for the colors of the electrophoretic particles such as red and white instead of black and white. In addition, in the present specification, an object being "colorless" refers to a state where it is possible to recognize that the color of a target object is substantially the same in a case of viewing the target object through the object which is colorless compared to a case of not viewing through the object which is colorless. In addition, an object being "transparent" refers to a state where it is possible to visually recognize a target object through the object which is transparent.

Fig. 5B is a partial cross sectional diagram of the display section 4. The element substrate 130 and the opposing substrate 131 interpose the electrophoretic element 132 where the microcapsules 120 are aligned. The display section 4 is provided with a drive electrode layer 350, which is formed with a plurality of the pixel electrodes 135, on the electrophoretic element 132 side on the element substrate 130. Fig. 5B illustrates a pixel electrode 135A and a pixel electrode 135B as the pixel electrode 135. It is possible to supply a potential (for example, Va and Vb) to each of the pixels using the pixel electrode 135. Here, the pixel with the pixel electrode 135A is a pixel 103A and the pixel with the pixel electrode 135B is a pixel 103B. The pixel 103A and the pixel 103B are two pixels which correspond to the pixel 103 (refer to Fig. 3 and Fig. 4).

On the other hand, the opposing substrate 131 is a transparent substrate and displaying of an image is carried out on the opposing substrate 131 side of the display section 4. The display section 4 is provided with a common electrode layer 370, which is formed with a common electrode 137 with a planar shape, on the electrophoretic element 132 side of the opposing substrate 131. Here, the common electrode 137 is a transparent electrode. Differently to the pixel electrode 135, the common electrode 137 is an electrode which is shared between all of the pixels and the common electrode 137 supplies a potential VCOM.

The electrophoretic element 132 is arranged in an electrophoretic display layer 360 which is provided between the common electrode layer 370 and the drive electrode layer 350, and the electrophoretic display layer 360 is the display region. It is possible to display a desired color in each of the pixels according to the potential difference between the pixel electrodes 135 (for example, 135A and 135B) and the common electrode 137.

Fig. 5B illustrates a state where the potential VCOM on the common electrode side is a potential which is higher than a potential Va of the pixel electrode 135A of the pixel 103A and a potential Vb of the pixel electrode 135B of the pixel 103B. At this time, since a negative voltage is applied between the pixel electrodes 135A and 135B and the common electrode 137 with the potential VCOM as a reference, the white particles 127 which are negatively charged are drawn to the common electrode 137 side, the black particles 126 which are positively charged are drawn to the pixel electrodes 135A and 135B side, and it is visibly recognized that white (which is an example of a first color) is displayed by the pixels 103A and 103B.

Fig. 5C illustrates a state where there is a change from the state in Fig. 5B such that the potential VCOM at the common electrode 137 side is a potential which is lower than the potential Va of the pixel electrode 135A of the pixel 103A and is a potential which is the same as the potential Vb of the pixel electrode 135B of the pixel 103B. At this time, since a positive voltage is applied between the pixel electrode 135A and the common electrode 137 with the potential VCOM as a reference, the black particles 126 which are positively charged are drawn to the common electrode 137 side, the white particles 127 which are negatively charged are drawn to the pixel electrode 135A side, and it is visibly recognized that the pixel 103A changes from white to black (which is an example of a second color). On the other hand, since there is no potential difference between the pixel electrode 135B and the common electrode 137, the black particles 126 and the white particles 127 barely move from the positions in Fig. 5B and it is visibly recognized that the pixel 103A does not change from white.

Here, it is also possible to display an arbitrary intermediate color which is between black and white (gray) if the black particles 126 and the white particles 127 are stationary at arbitrary intermediate positions between both electrodes due the size of the potential difference between the pixel electrode 135 and the common electrode 137 or the period of time over which the potential difference between the pixel electrode 135 and the common electrode 137 is generated.

In this manner, operating of the EPD panel is possible with low power consumption since it is possible to hold an image for a certain period of time even without supplying power, and in addition, since it is possible to view the EPD panel over 180 degrees, it is also appropriate to use the EPD panel as the display section for an electronic watch which is portable such as a wristwatch.

### [Image Updating Method]

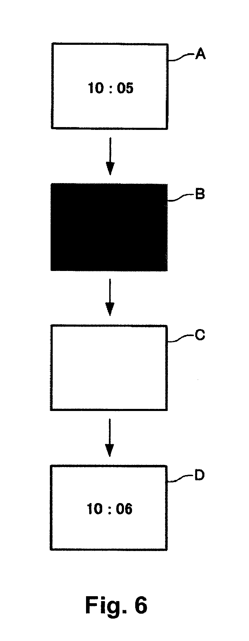

Fig. 6 is a diagram for describing a method for updating images on the display section 4. There is an example in Fig. 6 where the time display is updated each minute.

First, in the example in Fig. 6, when the time is 10:05, an image A, where pixels which are at the display positions of "10:05" are black and the rest of the pixels are white, is displayed on the display section 4.

Next, slightly before the time changes to 10:06, an image B where the entire surface is black is displayed on the display section 4. When updating from the image A to the image B, first, an image where the entire surface is black is displayed using a partial pixel drive method where no voltage is applied to the black pixels (0 V is applied) and a negative voltage is applied to the white pixels, and next, the image where the entire surface is black is redisplayed using an whole pixel drive method where a negative voltage is applied to all of the pixels. The whole pixel drive method is a driving system in which a potential difference (between the common electrode 137 and the pixel electrode 135) is generated in all of the pixels during a period of driving (drawing) where the system is being used.

Next, an image C where the entire surface is white is displayed on the display section 4. When updating from the image B to the image C, first, an image where the entire surface is white is displayed using the whole pixel drive method where a positive voltage is applied to all of the pixels, and next, the image where the entire surface is white is redisplayed due to the partial pixel drive method where a positive voltage is applied to the black pixels in the image A without any voltage being applied (0 V being applied) to the white pixels in the image A. The partial pixel drive method is a driving method in which there are pixels where no potential difference (between the common electrode 137 and the pixel electrode 135) is generated during a period of driving (drawing) where the system is used.

Next, when the time is 10:06, an image D, where the pixels at the display position of "10:06" are black and the rest of the pixels are white, is displayed on the display section 4. When updating from the image C to the image D, the image D is displayed using the partial driving method where a negative voltage is applied to the pixels which are in the display positions of "10:06" without any voltage being applied (0 V being applied) to the pixels which are not in the display positions of "10:06".

In this manner, in the present embodiment, an image where the entire surface is black is displayed using the partial pixel drive method and the whole pixel drive method, next, the original image is erased by displaying an image where the entire surface is white using the whole pixel drive method and the partial pixel drive method, and after this, the image which is next (a new image) is displayed using the partial pixel drive method. That is, according to the image updating method of the present embodiment, it is difficult for there to be a problem in that the color tone changes in each image since the next image is displayed from the state where all of the pixels are white. In addition, according to the image updating method of the present embodiment, it is possible to secure reliability in the electrophoretic display apparatus 7 for a long period of time since the average period of time for electric fields which are applied between each of the pixel electrodes 135 and the common electrode 137 is substantially zero and DC balance is possible.

Here, with regard to the display section 4 (the EPD panel), the period of time for driving (the period of time for applying the driving pulse), which is necessary in order to erase an image or draw a new image, changes according to the temperature, and a longer period of time for driving is typically necessary as the temperature falls. Therefore, in the present embodiment, table information which expresses a correspondence relationship between the temperature and the period of time for applying the driving pulse is stored in the flash ROM 12 which is built into the computation IC 10 in order to modify the period of time for driving according to the temperature when the image is updated.

The computation IC 10 acquires a temperature measurement value from the temperature measuring IC 40 before updating the image and references the table information which is stored in the flash ROM 12, and the period of time for applying the driving pulse which is appropriate according to the temperature is instructed when, for example, the drawing IC 30 is instructed to transfer image data to the display section 4.

### [Transitioning between Display Modes]

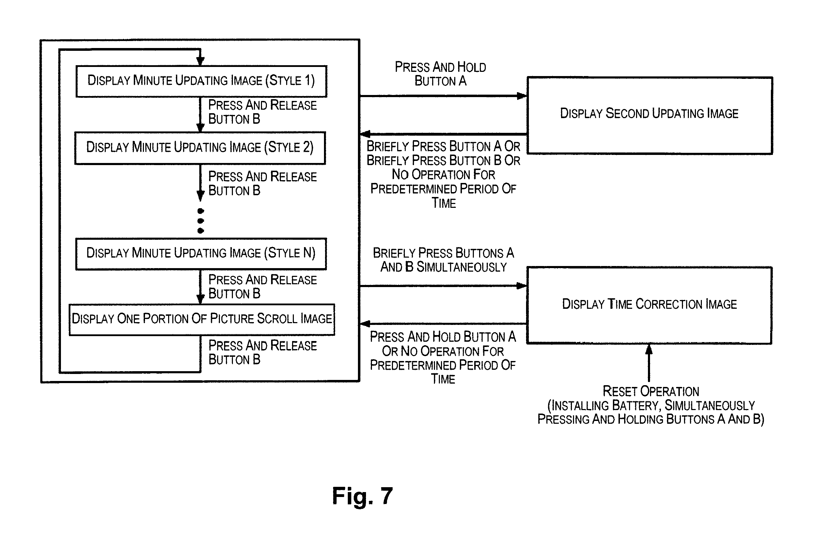

Fig. 7 is a diagram illustrating transitioning between display modes of the display section 4. In the present embodiment, when performing a reset operation, the computation IC 10 selects the time correction mode and displays a time correction screen on the display section 4. For example, the reset operation is an operation where a user installs a battery or an operation (a compulsory reset operation) where the operation buttons A and B are pressed simultaneously (are pressed and held down for a predetermined period of time or more). When the time correction image is displayed on the display section 4, the time which is displayed on the display section 4 is advanced or wound back when a user presses the operation buttons A or B.

Next, in a case where a user presses and holds down the operation button A or there is no operation for a predetermined period of time, the computation IC 10 selects the minute updating mode and a minute updating image with a style 1 is displayed on the display section 4. The minute updating image is prepared to have N of the styles and minute updating images with a style 2 to a style N are displayed in order on the display section 4 while the computation IC 10 selecting the minute updating mode remains unchanged each time a user presses and releases the operation button B. The time display is updated every minute when a minute updating image with any one of the styles 1 to N is displayed on the display section 4. Here, "style" in the present embodiment has the meaning of the basic design of an image which is displayed. "Style" is, for example, an aspect of displaying the time (such as time only or date and time), images which are displayed together, or a pattern for combining the arrangement of the font or the like. The minute updating image and the second updating image use an image for the watch with a size where it is possible to distinguish numerical characters or changing in minute units or second units so that it is possible for a user to ascertain changing of minutes or seconds.

When the minute updating image with the style N is displayed on the display section 4, the computation IC 10 selects the picture scroll mode and a portion of the picture scroll image is displayed on the display section 4 when a user presses and releases the operation button B. The image which is displayed on the display section 4 in the picture scroll mode will be described later in detail.

When a portion of the picture scroll image is displayed on the display section 4, the computation IC 10 selects the minute updating mode and the minute updating image with the style 1 is displayed on the display section 4 when a user presses and releases the operation button B.

In a state where the minute updating image or the picture scroll image is displayed, the minute updating mode continues with the style which was displayed last when a user stops operating the buttons (when further operation of the buttons is no longer performed). Alternatively, the picture scroll mode continues. Due to this, it is possible for a user to selectively display an image in the picture scroll mode or the minute updating mode with a desired style on the display section 4.

In addition, when the minute updating image with any one of the styles 1 to N or a portion of the picture scroll image is displayed on the display section 4, the computation IC 10 selects the second updating mode and the second updating image is displayed on the display section 4 when a user presses and holds down the operation button A. The time display is updated every second when the second updating image is displayed on the display section 4. When the second updating image is displayed on the display section 4, the computation IC 10 reselects the mode immediately before selecting of the second updating mode (the minute updating mode or the picture scroll mode) and displays the image immediately before displaying of the second updating image on the display section 4 in a case where a user briefly presses the operation button A or the operation button B (presses for a period of time which is shorter than the predetermined period of time) or there is no operation for a predetermined period of time.

In addition, when the minute updating image with any one of the styles 1 to N or a portion of the picture scroll image is displayed on the display section 4, the computation IC 10 selects the time correction mode and the time correction image is displayed on the display section 4 when a user briefly presses the operation buttons A and B simultaneously. When the time correction image is displayed on the display section 4, the computation IC 10 reselects the mode immediately before selecting of the time correction mode (the minute updating mode or the picture scroll mode) and displays the image immediately before displaying of the time correction image on the display section 4 in a case where a user presses and holds down the operation button A or there is no operation for a predetermined period of time.

### [Picture Scroll Mode]

The image which is displayed on the display section 4 in the picture scroll mode is an image which expresses the passage of time and is an image which recalls the flow of time over an interval which is longer than one minute (the interval for updating the time information in the minute updating mode) in the present embodiment. In detail, a portion of the picture scroll image is displayed (updated) on the display section 4 by a picture scroll image, where the size is larger than the image which is displayed on the display section 4, being scrolled. An image which includes a portion of the image before updating is displayed when the image is updated and the image changes every time several tens of minutes to several tens of minutes elapses.

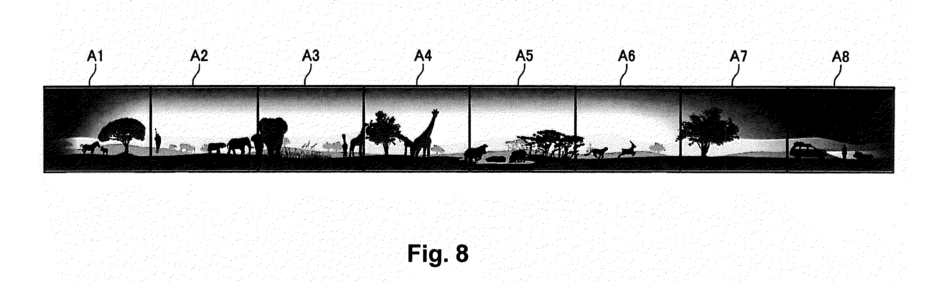

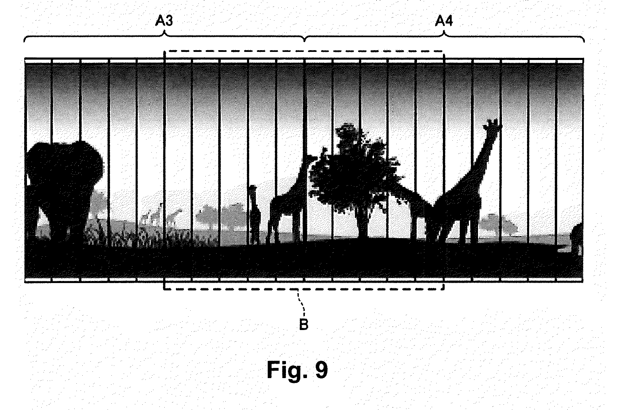

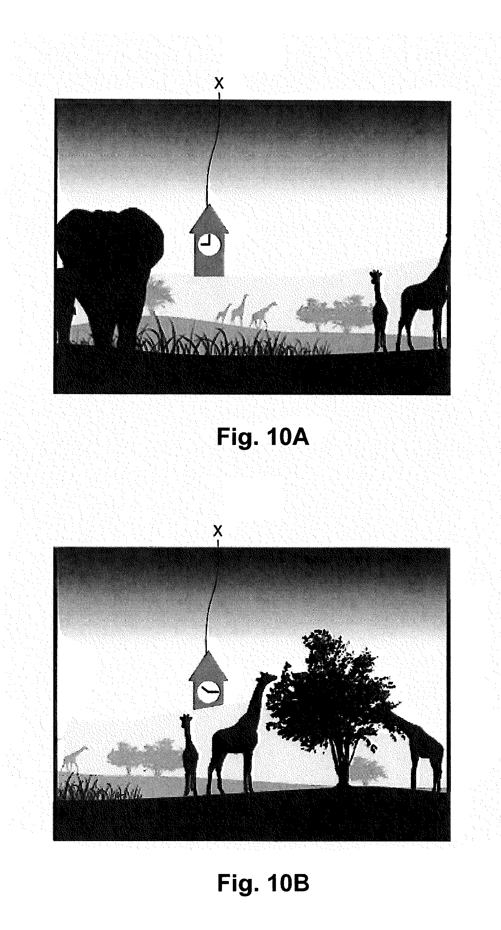

Fig. 8 illustrates an example of the picture scroll image. The picture scroll image shown in Fig. 8 is a picture scroll image where one day on an African savanna is imaged and is an image with a size of eight units of screen (8 screen units) of the display section 4. In Fig. 8, the size of each image of A1 to A8 corresponds to one screen unit (the size of one of the first images). With an image, where each of the images of A1 to A8 are divided into 10 equal parts, as the smallest denomination (one frame), images which are scrolled one frame at a time are sequentially displayed on the display section 4 along with the passage of time. That is, when the image is updated on the display section 4, the image before updating is shifted to the left by one frame and the image which is the next frame appears at the right edge. For example, the images of A3 and A4 are each divided into 10 equal units as shown in Fig. 9, and the image B (the image which is enclosed by the dashed line in Fig. 9), which spans across the image A3 and the image A4 which have been scrolled by five frames, is displayed on the display section 4 as shown in Fig. 10B when a desired period of time (here, as an explanation, the period of time which is equivalent to five times of updating) elapses since a state where the image A3 is displayed on the display section 4 as shown in Fig. 10A.

Since the body of the picture scroll image is divided into 80 frames, the same image is displayed on the display section 4 each time the 80 frames are scrolled in a state where the frame at the left edge and the frame at the right edge of the picture scroll image are connected. It is possible for a user to sense the flow of time of a day when viewing the image on the display section 4 due to the period of time which is necessary to scroll the 80 frames matching the length of one day. For example, the actual flow of time and the flow of time which is sensed from the images roughly matches due to scrolling to display the bright images in the picture scroll image which are the images of A2 to A6 during the day from around 6 am to around 6 pm and scrolling to display the dark images in the picture scroll image which are the images of A7, A8, and A1 at night time from around 6 pm to around 6 am of the next day.

The interval (the interval for updating the scroll image) over which one frame is scrolled may be the same for all of the frames or may change for some of the frames. For example, it is assumed that a user will often be sleeping during the night and would not notice the time so that the interval for updating the scroll image is relatively long at night time and the interval for updating the scroll image is relatively short during the day. In reality, in the picture scroll image which is illustrated in Fig. 8, the number of frames at night time (10 frames x approximately 3) is relatively low, the number of frames during the day (10 frames x approximately 5) is relatively high, and it is possible for the interval for updating the scroll images to be different at night time (in particular, during the night after midnight) and during the day.

In addition, time information is also displayed to overlap with the scroll image in the present embodiment. In the images in Fig. 10A and Fig. 10B, an image X (which is an example of a third image) which is modeled on a watch (a clock) is displayed to overlap with a portion of the picture scroll image and the hands of the clock point to 9:10 am in Fig. 10A and 10:15 am in Fig. 10B. That is, five frames of the images are scrolled over one hour and 15 minutes with one frame every 15 minutes.

In the present embodiment, the time information on the clock has no relationship to scrolling of the picture scroll image and is updated every minute. That is, the image in Fig. 10A is displayed at the same time at 9 am, the hands of the clock move every minute when one minute elapses with the image in Fig. 10A remaining unchanged until the time reaches 9:15 am, the image is scrolled by one frame at the same time as the time turns 9:15 am, and the image is updated to an image where the hands of the clock are displayed at 9:15 am. In this manner, the interval for updating the scroll image (a minimum of 15 minutes) and the interval for updating the image X which is modeled on a clock (one minute) are different and the former is longer in the present embodiment. Accordingly, the current scroll image is refreshed by deleting or redrawing every minute until the scroll image is updated to the scroll image which is next, and defects in the display image such as a reduction in contrast are suppressed. Here, since the picture scroll mode is a mode for enjoying rough changes in time, it is not necessary for it to be possible for a user to distinguish the time in minute units due to the image of the clock. It is sufficient if a user is able to recognize the elapsing of time to the extent of recognizing the elapsing of five minutes or the elapsing of 15 minutes or one hour.

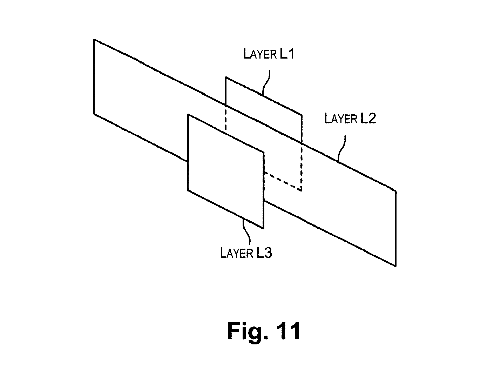

In the present embodiment, since the scroll image of the picture scroll and the image X which is modeled on a clock are displayed to overlap, a plurality of layers are defined and the images which are displayed on the display section 4 are stored in the flash ROM 32 to be associated with the layers in the picture scroll mode. Fig. 11 is a diagram for describing a layer structure in the present embodiment and three layers of layers L1 to L3 are defined in the present embodiment as shown in Fig. 11. From the view of a user, the layer L1 is the farthest layer (the bottom layer) and the layer L3 is the closest layer (the top layer). An image of a body of a clock (an image where the hands are omitted from the image X) is associated with the layer L1, the picture scroll image is associated with the layer L2, and an image of the hands of the clock is associated with the layer L3. In the picture scroll mode, the image of the body of the clock in the layer L1 is always the same, the display portion of the picture scroll image in the layer L2 is scrolled, and the image of the hands in the layer L3 changes every minute. It is possible display the images as shown in Fig. 10A and Fig. 10B by an image, which is composed by the images of the layers L1 to L3 being overlapped, being drawn on the display section 4.

Here, the picture scroll image is stored in the flash ROM 12 so that, for example, a background image (the image of the mountains and animals which are gray in Fig. 8 and the like) and a main image (the image of the animals, the people, and the car which are black in Fig. 8 and the like) are separated and individually associated with layers L2A and L2B respectively and an image, which is composed by the images of the layers L1, L2A, L2B, and L3 being overlapped, is drawn on the display section 4.

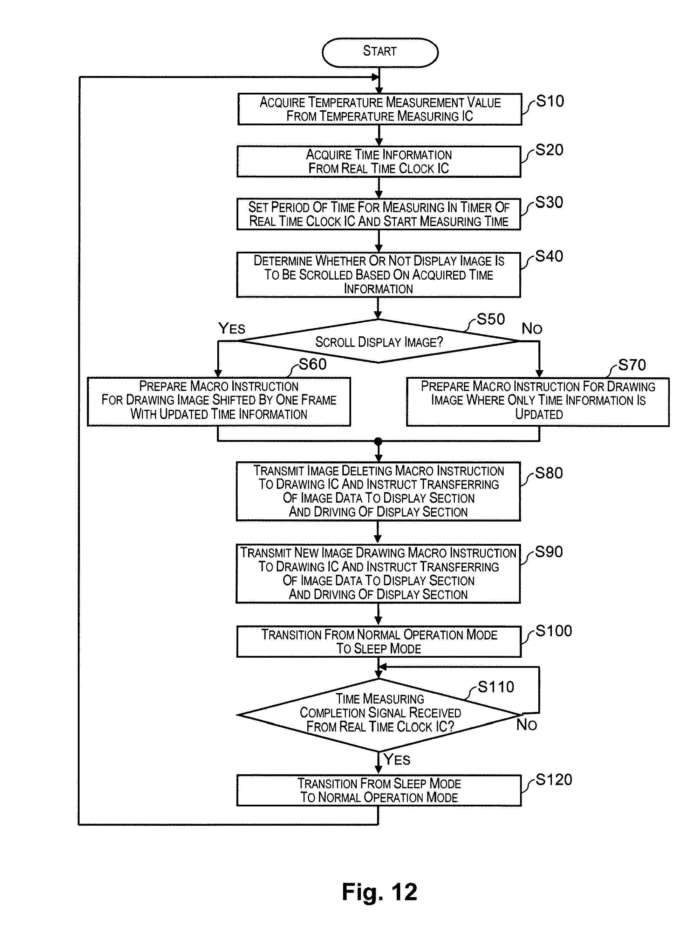

Fig. 12 is a flow chart diagram illustrating an outline of a processing procedure for the picture scroll mode using the computation IC 10.

As shown in Fig. 12, first, the computation IC 10 acquires a temperature measurement value from the temperature measuring IC 40 when in a normal operation mode (S10).

Next, the computation IC 10 acquires time information from the real time clock IC 20 (S20).

Next, the computation IC 10 sets a period of time for measuring in the timer 22 of the real time clock IC 20 and starts measuring time (S30). In the present embodiment, the period of time for measuring is set to a value of less than one minute, for example, a value of approximately 50 seconds so that drawing on the display section 4 due to the processing in step S90 is performed every minute.

Next, the computation IC 10 determines whether or not the display image is to be scrolled based on the time information which is acquired in step S20. In detail, a correspondence table, where each of the images of A1 to A8 in the picture scroll image and the interval for updating the scroll image correspond, is stored in the flash ROM 12, and the computation IC 10 references the correspondence table and determines whether or not the current scroll image is to be updated to the next scroll image.

In a case where the display image is to be scrolled (yes in step S50), the computation IC 10 prepares a macro instruction (the image deleting macro instruction and the new image drawing macro instruction) which is necessary in order to draw an image where the current scroll image is shifted by one frame and the time on the hands of the clock is updated (the image which is composed of the images of the layers L1 to L3) (S60).

On the other hand, in a case where the display image is not to be scrolled (no in step S50), the computation IC 10 prepares a macro instruction (the image deleting macro instruction and the new image drawing macro instruction) which is necessary in order to draw an image where only the time on the hands of the clock is updated (S70).

Next, the computation IC 10 transmits the image deleting macro instruction to the drawing IC 30 and instructs transferring of image data to the display section 4 and driving of the display section 4 (S80). The drawing IC 30 deletes the image on the display section 4 based on the macro instruction.

Next, the computation IC 10 transmits the new image drawing macro instruction to the drawing IC 30 and instructs transferring of image data to the display section 4 and driving of the display section 4 (S90). The drawing IC 30 updates the image on the display section 4 based on the macro instruction.

Next, the computation IC 10 transitions from the normal operation mode to the sleep mode (S100) and is in standby until a time measuring completion signal (an interruption signal) from the real time clock IC 20 (no in step S110).

When time measuring by the timer 22 is complete, the real time clock IC 20 transmits a time measuring completion signal (an interruption signal) to the computation IC 10. The computation IC 10 transitions from the sleep mode to the normal operation mode (S120) when the time measuring completion signal (the interruption signal) is received (yes in step S 110) and processing from step S10 is performed again.

As described above, according to the electronic watch 1 of the first embodiment, it is possible for a user to accurately ascertain the time each minute or each second if a minute updating mode or a second updating mode is selected and it is possible a user to enjoy the flow of time by displaying an image where display objects (animals or the like) are moved gradually to match time if the picture scroll mode is selected.

In addition, according to the electronic watch 1 of the first embodiment, it is possible for a user to ascertain the approximate time without any sense of incongruity using the image of the clock in the picture scroll mode and it is possible for a user to sense the flow of time due to changes in the position of the hands on the clock when the picture scroll image is not being scrolled. Displaying the precise time is not always necessary in the picture scroll mode. There are cases where the atmosphere created by the picture scroll image breaks down when, for example, numerical values are displayed each minute. However, it is often the case that not knowing the time at all is inconvenient. Therefore, time is displayed so that a user is able to get a rough estimate by an image which matches the atmosphere created by the picture scroll image (the image of the clock in the present embodiment) being displayed.

In addition, according to the electronic watch 1 of the first embodiment, the display section 4 is configured by a EPD panel where it is possible for an image to be held without power being supplied for a certain period of time, and operating with a low power consumption is possible since the computation IC 10 transitions to the sleep mode and operating stops when the image is not being updated. Accordingly, it is possible to realize the electronic watch which is able to operate for a number of years even using, for example, a battery with a small capacity such as a button battery.

### 2. Second Embodiment

The picture scroll image and processing by the computation IC 10 in the picture scroll mode in the electronic watch 1 according to a second embodiment is different to the first embodiment. Since the electronic watch 1 of the second embodiment is the same as the electronic watch 1 of the first embodiment except for the picture scroll image and processing by the computation IC 10 in the picture scroll mode, the same reference numerals are applied to configurations which are the same as the electronic watch 1 of the first embodiment and the same description thereof is omitted, and there is description below centered on the content which is different to the first embodiment.

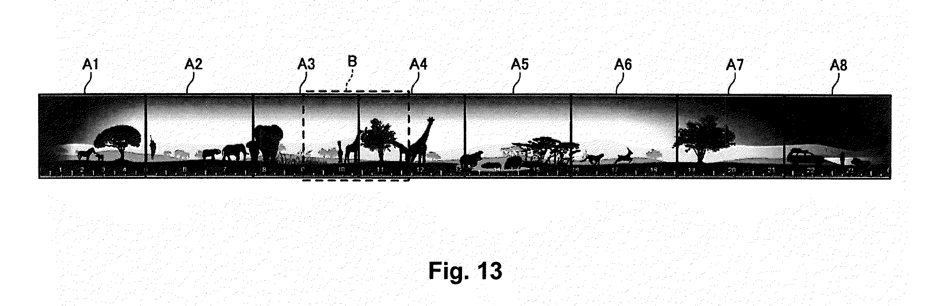

Fig. 13 is a diagram illustrating an example of a picture scroll image in the second embodiment. The picture scroll image shown in Fig. 13 has an image with the time information, that is, an image of a time scale expressing 24 hours at a lower section, along with the image which is the same as in Fig. 8. In the picture scroll image shown in Fig. 13, there are relatively lower number of frames at night time and relatively higher number of frames during the day, and the interval for updating the scroll image changes at night time (in particular, during the night after midnight) and during the day in the same manner as Fig. 8. For this reason, the interval for the time scale is not a certain interval, and the interval for the scale is shorter in an image of A1 which is an image at night time (in particular, during the night after midnight) and the interval for the scale is longer in an image of A4 and an image of A5 which are images during the day.

In the present embodiment, the time scale is simultaneously scrolled when the image which is displayed in the display section 4 is being scrolled. In other words, the image of the animals, the background, and the like and the image of the scale which are shown in Fig. 13 are scrolled together with the relative positions being fixed.

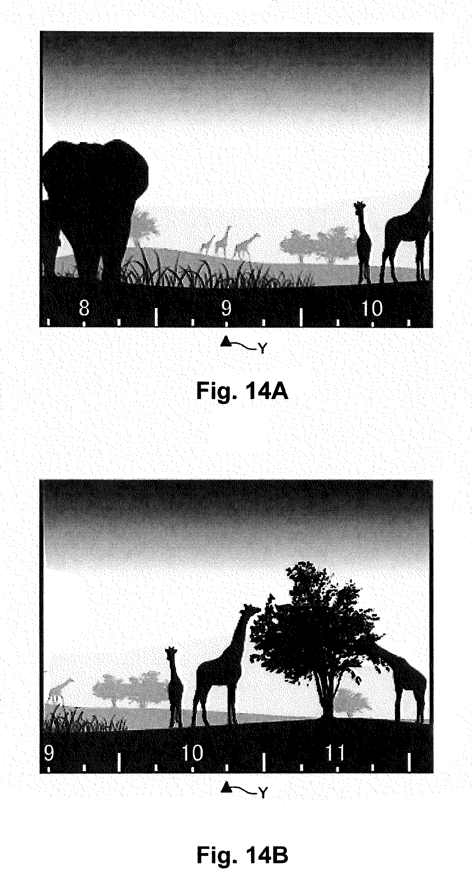

Figs. 14A and 14B are diagrams illustrating examples of images which are displayed on the display section 4. When a desired period of time elapses from a state where the image A3 is displayed on the display section 4 as shown in Fig. 14A, the image B, which spans across the image A3 and the image A4 (the image which is enclosed by the dashed line in Fig. 13) which have been scrolled by five frames, is displayed on the display section 4 as shown in Fig. 14B. An upward symbol (triangle mark) is printed in the vicinity of the center on the lower side of the outer frame of the display section 4 and the time on the scale which is pointed to by the symbol is the current time information. The current time information is 9 am in Fig. 14A and 10:15 am in Fig. 14B. That is, five frames of the images are scrolled over one hour and 15 minutes with one frame every 15 minutes. Here, the mark which points to and indicates the current time information may be displayed on the display section 4 as an image.

In the manner, the second embodiment is different to the first embodiment, and the interval for updating the time is not the interval of one minute and is matched with the interval for updating the scroll image (a minimum of 15 minutes). Here, since defects in the display image such as a reduction in contrast are generated when the interval for updating the scroll image is too long, the current scroll image is refreshed due to an image being erased or redrawn every predetermined period of time until the next scroll image is updated in the present embodiment. Since it is possible for the cycle for refreshing to be set independently from the cycle for updating the time, the cycle for refreshing may be set to be a period of time (for example, three minutes) which is longer than the cycle for refreshing (one minute) in the first embodiment. If the cycle for refreshing is as long as possible, it is possible to significantly reduce power consumption which is necessary for drawing an image. Here, refreshing may be performed using a shaking pulse which is well known instead of being performed by redrawing.

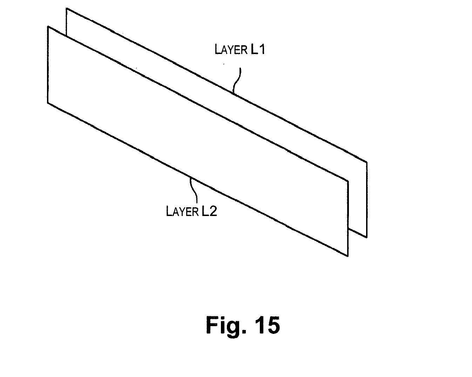

Even in the present embodiment, a plurality of layers are defined in the picture scroll mode and the images which are displayed on the display section 4 are stored in the flash ROM 32 to be associated with the layers. Fig. 15 is a diagram for describing a layer structure in the second embodiment. Two layers of layers L1 and L2 are defined in the second embodiment as shown in Fig. 15. From the view of a user, the layer L1 is the farthest layer and the layer L2 is the closest layer. The picture scroll image excluding the image of the scale is associated with the layer L1 and the image of the time scale is associated with the layer L2. In the picture scroll mode, the image of the layer L1 and the image of the layer 2 scroll at the same speed. It is possible display the images as shown in Fig. 14A and Fig. 14B by an image, which is composed by the images of the layers L1 and L2 being overlapped, being drawn on the display section 4. Here, there may be a configuration in a case where the scale is used where the picture scroll image which includes the scale is associated with the layer 1.

Here, the picture scroll image excluding the image of the time scale is stored in the flash ROM 12 so that, for example, a background image (the image of the mountain and animals which are gray in Fig. 13 and the like) and a main image (the image of the animals, the people, and the car which are black in Fig. 13 and the like) are separated and individually associated with layers L1A and L1B respectively and an image, which is composed by the images of the layers L1, L2A, and L2 being overlapped, is drawn on the display section 4.

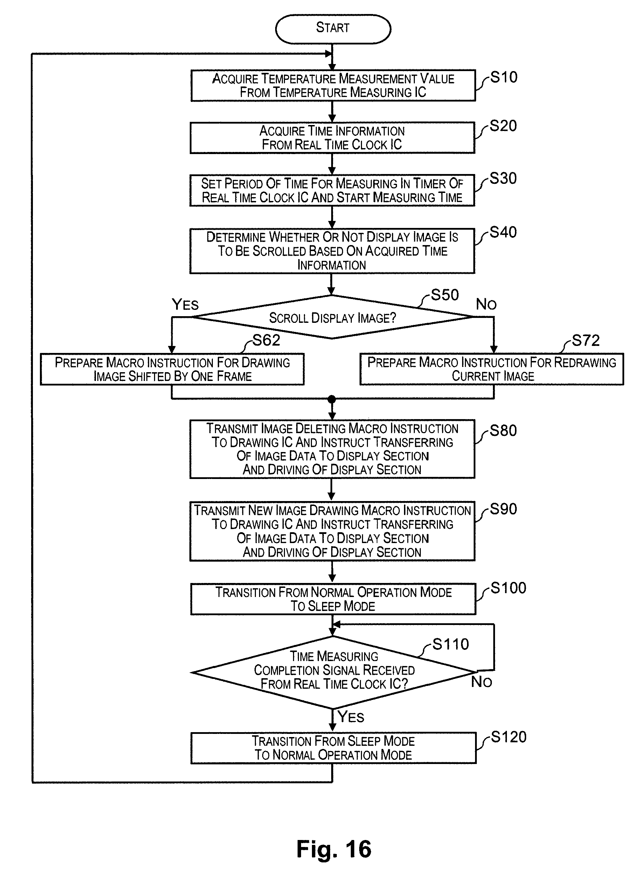

Fig. 16 is a flow chart diagram illustrating an outline of a processing procedure for the picture scroll mode using the computation IC 10. The same reference numerals are given in Fig. 16 to processing which is the same as Fig. 12.

As shown in Fig. 16, first, the computation IC 10 performs the same processing as steps S10 to S30 in Fig. 12 when in the normal operation mode. Here, the period of time for measuring is set to an appropriate value in step S30 so that refreshing of the display image due to the processing in step S90 is performed with a desired frequency.

Next, the computation IC 10 determines whether or not the display image is to be scrolled (S40) based on the time information which is acquired in step S20, and in a case where the display image is to be scrolled (yes in step S50), the computation IC 10 prepares a macro instruction (the image deleting macro instruction and the new image drawing macro instruction) which is necessary in order to draw an image where the current scroll image is shifted by one frame (the image which is composed by the images of the layers L1 to L2) (S62).

On the other hand, in a case where the display image is not to be scrolled (no in step S50), the computation IC 10 prepares a macro instruction (the image deleting macro instruction and the new image drawing macro instruction) which is necessary in order to redraw the current image (S72).

Then, the computation IC 10 performed processing in the same manner as steps S80 to S120 in Fig. 12 and performs processing from step S10 again.

According to the electronic watch 1 of the second embodiment, it is possible to achieve the same effects as the electronic watch 1 of the first embodiment. In addition, according to the electronic watch 1 of the second embodiment, it is possible for a user to ascertain the approximate time without any sense of incongruity using the image of the time scale which is scrolled along with the picture scroll image in the picture scroll mode.

### 3. Third Embodiment

Processing by the computation IC 10 in the picture scroll image in the electronic watch 1 according to a third embodiment is different to the first embodiment and the second embodiment. Since the electronic watch 1 of the third embodiment is the same as the electronic watch 1 of the first embodiment and the electronic watch 1 of the second embodiment except for processing by the computation IC 10 in the picture scroll image, the same reference numerals are applied to configurations which are the same as the electronic watch 1 of the first embodiment and the electronic watch 1 of the second embodiment and the same description thereof is omitted, and there is description below centered on the content which is different to the first embodiment and the second embodiment.

A portion of the picture scroll image shown in Fig. 8 and Fig. 13 is displayed on the display section 4 to be scrolled in the picture scroll mode in the third embodiment in the same manner as the first embodiment and the second embodiment, but a special image (which is an example of a fourth image) is displayed so as to overlap with a portion of the picture scroll image on a specific time and date. For example, when it is a day which is set by a user, an anniversary which is decided in advance, or the like, the special image such as a special picture or message is displayed so as to overlap with a portion of the scroll image. The content of the image which is displayed is content which relates to the specific time and date.

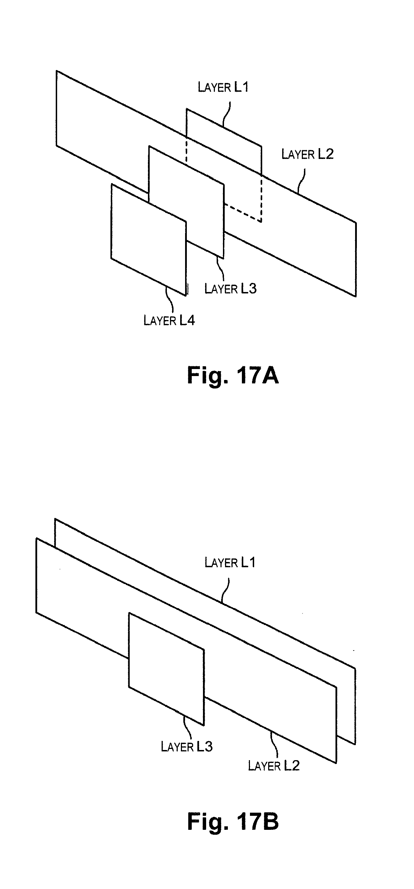

Figs. 17A and 17B are diagrams for describing an example of a layer structure in the third embodiment. A layer L4 is further defined in the layer structure shown in Fig. 17A with regard to the layer structure shown in Fig. 11, the special image is stored in the flash ROM 32 to be associated with the layer L4, and an image, which is composed by the images of the layers L1 to L4 being overlapped, is displayed on the display section 4.

In the same manner, a layer L3 is further defined in the layer structure shown in Fig. 17B with regard to the layer structure shown in Fig. 14, the special image is stored in the flash ROM 32 to be associated with the layer L3, and an image, which is composed by the images of the layers L1 to L3 being overlapped, is displayed on the display section 4.

A diagram for a flow chart and detail description is omitted for the processing schedule for the picture scroll mode using the computation IC 10 in the third embodiment. For example, it is sufficient if the computation IC 10 further determines whether or not the time which is displayed next matched with the specific time and date in step S40 of the flowchart in Fig. 12 or step S40 of the flowchart in Fig. 16 based on the time information which is acquired and prepares a macro instruction where the special image is further displayed so as to overlap in step S60 and step S70 of the flowchart in Fig. 12 or step S62 and step S72 of the flowchart in Fig. 16.

According to the electronic watch 1 of the third embodiment, it is possible to achieve the same effects as the electronic watch 1 of the first embodiment and the second embodiment. Furthermore, according to the electronic watch 1 of the third embodiment, it is possible for a user to be further entertained since it is possible for the special image to be displayed on a specific time and date in the picture scroll mode.

### 4. Fourth Embodiment

The image which is displayed on the display section 4 changing according to the season (which is an example of a specific period) in the electronic watch 1 according to a fourth embodiment is different to the first embodiment and the second embodiment. Since the electronic watch 1 of the fourth embodiment is the same as the electronic watch 1 of the first embodiment and the electronic watch 1 of the second embodiment except for the image which is displayed on the display section 4 and processing by the computation IC 10 in the picture scroll image, the same reference numerals are applied to configurations which are the same as the electronic watch 1 of the first embodiment and the electronic watch 1 of the second embodiment and the same description thereof is omitted, and there is description below centered on the content which is different to the first embodiment and the second embodiment.

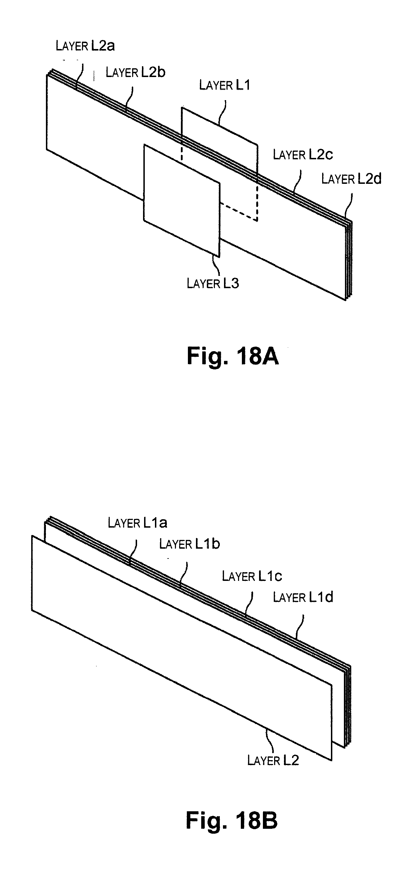

Figs. 18A and 18B are diagrams for describing an example of a layer structure in the fourth embodiment. Four layers of layers L2a to L2d are defined in the layer structure shown in Fig. 18A instead of the layer L2 with regard to the layer structure shown in Fig. 11 and the picture scroll images which are different to each other (for example, four types of picture scroll images which represent spring, summer, autumn, and winter) are stored in the flash ROM 32 to be respectively associated with the layers L2a, L2b, L2c, and L2d. Then, the layer L2a is selected as a layer for the picture scroll image between March and May, the layer L2b is selected as a layer for the picture scroll image between June and August, the layer L2c is selected as a layer for the picture scroll image between September and November, and the layer L2d is selected as a layer for the picture scroll image between December and February, and an image which is composed by the image of the layer L1, one of the images out of the layers L2a to L2d which is selected, and the image of the layer L3 being overlapped, is drawn on the display section 4.

In the same manner, four layers of layers L1a to Lid are defined in the layer structure shown in Fig. 18B instead of the layer L1 with regard to the layer structure shown in Fig. 14 and the picture scroll images which are different to each other (for example, four types of picture scroll images which represent spring, summer, autumn, and winter) are stored in the flash ROM 32 to each be respectively associated with the layers L1a, Lib, L1c, and Lid. Then, the layer L1a is selected as a layer for the picture scroll image between March and May, the layer L1b is selected as a layer for the picture scroll image between June and August, the layer L1c is selected as a layer for the picture scroll image between September and November, and the layer Lid is selected as a layer for the picture scroll image between December and February, and an image which is composed by one of the images out of the layers L1a to Lid which is selected and the image of the layer L2 being overlapped, is drawn on the display section 4. Here, the months for selecting the layers which correspond to the summer are different in the northern hemisphere and the southern hemisphere and there may be seasons other than the four main seasons such as the rainy season or the dry season.

A diagram for a flow chart and detail description is omitted for the processing schedule for the picture scroll mode using the computation IC 10 in the fourth embodiment. For example, it is sufficient if the computation IC 10 further performs processing for selecting the picture scroll image which is used as the scroll image in step S40 of the flowchart in Fig. 12 or step S40 of the flowchart in Fig. 16 based on the time information which is acquired and prepares a macro instruction where an image, which uses a portion of the picture scroll image which is selected, is drawn in step S60 and step S70 of the flowchart in Fig. 12 or step S62 and step S72 of the flowchart in Fig. 16.

Here, it is possible for the image which is displayed on the display section 4 to change according to the seasons by defining the layers which are associated with the images which represent the seasons (in the same manner as the layer for the special image in the third embodiment) separately to the layer for the picture scroll image and the images for each of the layers being displayed so as to overlap.

According to the electronic watch 1 of the fourth embodiment, it is possible to achieve the same effects as the electronic watch 1 of the first embodiment and the second embodiment. Furthermore, according to the electronic watch 1 of the fourth embodiment, it is possible for a user to sense changes in the seasons while roughly sensing the flow of time in the picture scroll mode.

The present invention is not limited to the embodiments described above and various modified aspects are possible with the scope of the gist of the present invention.

For example, a wrist watch which includes an electrophoretic display apparatus is described as an example in each of the embodiments described above, but the present invention is not limited to a wrist watch and it is possible for the present invention to also be applied to, for example, a clock or a portable electronic watch, an electronic device which has a time measuring function, a sporting device which is worn on the wrist such as a runner's watch, a wearable device such as a pulse monitor, and the like.

In addition, for example, an image which is long in the horizontal direction is scrolled in the horizontal direction in each of the embodiments described above, but an image which is long in the vertical direction may be scrolled in the vertical direction.

In addition, for example, it is assumed that the operation button A (5a) and operation button B (5b) are positioned in the up and down direction in physical space (such as when the electronic watch 1 is placed so as to be supported by the bands 3 in a state where the upper and lower bands 3 are fastened) such as when the electronic watch 1 shown in Fig. 1 is placed on a desk in a state where the two bands 3 are fastened (in a ring state). In this state, the image which is displayed on the display section 4 may be displayed as an image (a vertical image) which is long in a direction (the vertical direction) which is rotated by 90 degrees with regard to the up and down direction of the image when the watch is mounted on a wrist (the longitudinal direction of the bands 3) due to a predetermined operation or detecting of an action and the vertical image may be scrolled and displayed so that it is possible for a use to correctly recognize the display image.

In addition, for example, the image, where one day on an African savanna is imaged, is described as an example of the image which expresses the passage of time in each of the embodiments described above, but other than this, there may be an image where, for example, an episode from a nursery tale is imaged, an image of various train lines or changing scenery, an image where various action scenes of an animated character develop to match the time, an image where a world trip is imaged, an image where a plant changes with time, an image where various sea creatures are introduced while a scuba diver swims in the ocean, an image of an animal such as a cat walking, an image where the poses of a sports person change to match the time, an image where zodiac signs changed to match the time, an image where a geometric pattern changes to match the time, an image where types of vehicles (such as famous cars from history) change to match the time, and the like.

In addition, for example, the image, where the brightness of the scenery in the surroundings changes due to scrolling of the picture scroll image, is described as an example of the image which expresses the passage of time in each of the embodiments described above, but the present invention is not limited to this and there may be an image so that, for example, the shadow of a sundial gradually changes.

In addition, for example, an image with the same daily cycle is repeatedly displayed on the display section 4 in each of the embodiments described above, but there may be a weekly, monthly, or yearly cycle or the like. These periods are examples of a specific period. For example, an image of the phases of the moon which change every day, an image of flowers which change according to the four seasons, an image of constellations where the positions and types which can be seen over the cycle of one year change, an image of a daily calendar, an image of scenery which changes every month, an image which expresses the phases of the moon, and the like may be displayed.

The embodiments and modified examples described above are examples and do not limit the present invention. For example, it is possible for each of the embodiments and each of the modified examples to be appropriately combined.

The present invention includes configurations which are substantially the same as the configurations which are described using the embodiments (for example, configurations where the functions, methods, and effects are the same or configurations where the object and the effects are the same). In addition, the present invention includes configurations where a nonessential portion of the configurations which are described using the embodiments is replaced. In addition, the present invention includes configurations which contribute to the same operational effects as the configurations which are described using the embodiments and configurations where it is possible to achieve the same object as the configurations which are described using the embodiments. In addition, the present invention includes configurations in which known art is added to the configurations which are described using the embodiments.

### GENERAL INTERPRETATION OF TERMS

In understanding the scope of the present invention, the term "comprising" and its derivatives, as used herein, are intended to be open ended terms that specify the presence of the stated features, elements, components, groups, integers, and/or steps, but do not exclude the presence of other unstated features, elements, components, groups, integers and/or steps. The foregoing also applies to words having similar meanings such as the terms, "including", "having" and their derivatives. Also, the terms "part," "section," "portion," "member" or "element" when used in the singular can have the dual meaning of a single part or a plurality of parts. Finally, terms of degree such as "substantially", "about" and "approximately" as used herein mean a reasonable amount of deviation of the modified term such that the end result is not significantly changed. For example, these terms can be construed as including a deviation of at least ± 5% of the modified term if this deviation would not negate the meaning of the word it modifies.

While only selected embodiments have been chosen to illustrate the present invention, it will be apparent to those skilled in the art from this disclosure that various changes and modifications can be made herein without departing from the scope of the invention as defined in the appended claims. Furthermore, the foregoing descriptions of the embodiments according to the present invention are provided for illustration only, and not for the purpose of limiting the invention as defined by the appended claims and their equivalents.

## Claims

1. An electronic watch comprising:
a display section,
wherein the electronic watch has a first mode in which a first image that expresses passage of time is displayed on the display section and a second mode in which a second image that includes time information is displayed on the display section.

2. The electronic watch according to claim 1, wherein
the display section includes two substrates and an electrophoretic element that is arranged between the two substrates and has electrophoretic particles, the display section being configured to display at least a first color and a second color.

3. The electronic watch according to claim 1 or claim 2, wherein
an interval for updating the first image is longer than an interval for updating the second image.

4. The electronic watch according to any of claims 1-3, wherein
the interval for updating the first image is longer than one minute.

5. The electronic watch according to any of claims 1-4, wherein
an image in which a layer with the first image and a layer with a third image that is indicative of a watch overlap with each other is displayed in the first mode.

6. The electronic watch according to claim 5, wherein
the interval for updating the first image is longer than the interval for updating the third image.

7. The electronic watch according to any of claims 1-4, wherein
the first image that includes a time scale, or an image in which a layer with the first image and a layer with an image that includes the time scale overlap with each other is displayed on the display section in the first mode.

8. The electronic watch according to any of claims 1-7, wherein
the first image is updated in the first mode by an image that is larger than the first image being scrolled.

9. The electronic watch according to any of claims 1-8, wherein
an image in which a layer with a fourth image that relates to a specific time and date is overlapped with a layer with the first image is displayed at the specific time and date in the first mode.

10. The electronic watch according to any of claims 1-9, wherein
the first image that is different according to specific periods, or an image according to a season that overlaps with at least a portion of the first image is displayed on the display section in the first mode.
